Europäisches Patentamt

European Patent Office

Office européen des brevets

(19)

(11) Publication number: **0 330 960**
**A2**

# (12) EUROPEAN PATENT APPLICATION

(21) Application number: **89102933.2**

(22) Date of filing: **20.02.89**

(51) Int. Cl.⁴: **B32B 5/08 , B32B 27/08**

(30) Priority: **04.03.88 US 164210**

(43) Date of publication of application:
**06.09.89 Bulletin 89/36**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Vallance, Michael Alan**
**511 Union Street**
**Schenectady New York 12305(US)**
Inventor: **McAlea, Kevin Patrick**
**32 North Ferry Street**
**Schenectady New York 12305(US)**
Inventor: **Reed, Randall Alan**
**1208 Tam O'Shanger Drive**
**Mount Vernon Indiana 47620(US)**

(74) Representative: **Catherine, Alain**
**General Electric France Service de Propriété**
**Industrielle 18 Rue Horace Vernet B.P. 76**
**F-92134 Issy-les-Moulineaux Cédex(FR)**

(54) **Fiber-reinforced thermoplastic composites from flexiblethinlayered prepregs.**

(57) Disclosed are fiber-reinforced thermoplastic composites formed from flexible thin-layered prepregs having substantially unidirectional fiber reinforcement. These prepregs provide good flexibility and draping qualitites which allow them to be layed up on tools and then heat-fused to make rigid, high strength three dimensional articles.

Figure 1

EP 0 330 960 A2

# FIBER-REINFORCED THERMOPLASTIC COMPOSITES FROM FLEXIBLE THIN-LAYERED PREPREGS

This invention relates to fiber-reinforced thermoplastic composites. More particularly, it concerns rigid composites which are formed from thin-layered, unidirectional fiber-reinforced prepregs.

## BACKGROUND OF THE INVENTION

Composites in the form of fiber-reinforced plastic panels have become an important building material in many manufacturing applications such as body members on automobiles. Such composites are attractive substitutes for conventional curved metal parts because they exhibit good stiffness, strength, impact resistance and dimensional stability while being light in weight; they may be shaped into the same configurations as stamped metal parts; they can be produced at the same or lower costs; and they offer an attractive route to part consolidation.

Several composite systems based on thermoplastic resins have been disclosed.

In U.S. 3,765,998, Oswald, et al, disclose a high-impact resin sheet having high interlaminar strength which may be formed on cold tools comprising a glass fiber mat impregnated with polyethylene terephthalate, where the glass fiber length is at least one inch and the reinforcement comprises a semi-continuous phase which is not undirectional.

In U.S. 4,369,264, Bauman, et al, disclose glass fiber-reinforced polyolefin composite sheets using polypropylene as the impregnating resin for a treated glass fiber mat. Again the reinforcement comprises a semi-continuous phase which is not unidirectional. The resultant reinforced polymers exhibit stampability.

The composites in both the aforementioned patents employ a non-woven glass fiber mat as the reinforcement. This type of reinforcement is planar (flat) and has an essentially random planar orientation of the fibers. In the process of thermostamping mat-reinforced composites, the fibers tend to move about in the plane of the blank. Such a reinforcement geometry is chosen because upon thermal softening and pressure, the reinforced composition can be made to flow, i.e., both fiber and resin, to fill a tool cavity. Because the glass fiber mat is semi-continuous, depletion of the reinforcement in bends of small radius, as might happen in bending and stretching a blank reinforced with short fibers, can often be avoided. A drawback, however, to the peculiar geometry of these non-woven mats is that there are limits to the fiber volume fraction that can be obtained. Also, fiber orientation tends to be random in the plane of the mat, so that the normal and bending properties are isotropic, and therefore undesirable. The orientation of a particular glass roving at the surface of a part is just as likely to be perpendicular to the major principal stress as parallel to the stress. Thus, there is a tendency for delamination near the surface to occur, which represents another serious drawback to the composites disclosed in U.S. 3,765,998 and U.S. 4,369,264. The most serious shortcomings of these mat-reinforced composites include large-scale heterogeneity due to the occurrence of the fibers as bunched slivers with dozens of fibers grouped therein. This heterogeneity causes large variations in engineering properties, such as stiffness and strength. A second serious shortcoming is that these fiber mats tend to resist flow due to numerous entanglements. Very high forming pressures are required, and often, flow separation occurs, wherein fiber depleted areas at the periphery of a molding occur.

In the commonly assigned, copending disclosure of Adams, et al, U.S. Patent Application Serial No. 814,960, filed December 31, 1985, there are taught composite co-extruded materials comprising a thermoplastic core layer having at least one inorganic and/or organic constituent dispersed therein, e.g., colorants and reinforcing agents, and two thermoplastic layers attached to each surface of the core layer. The thermoplastic core layer is typically a polycarbonate, as are bother outer layers. Each of the outer layers in the composite materials disclosed by Adams, et al, has a sufficient thickness, typically 0.5 mil to about 30 mils to prevent the undesirable migration of the inorganic or organic constituents from the core, which could damage the extruder or other auxiliary equipment. There is no suggestion from the Adams, et al, application of fiber-reinforced thermoplastic composites formed from thin, short fiber-reinforced aromatic polycarbonate films, where the reinforcing fibers are substantially discontinuous and unidirectionally orientated.

It has now been surprisingly discovered that versatile, high strength fiber-reinforced thermoplastic composites can be made using short reinforcing fibers (i.e., 0.002 to 2 cm) in very thin (i.e., 0.002 to 0.3 cm) thermoplastic films. Prepreg laminates are drapeable upon heating to form complex three-dimensional shapes, which on cooling becomes rigid, dimensionally stable, integral composites. The reinforced thermoplastic layers of such composites are characterized by high fiber loadings and a substantially undirectional orientation of the reinforcing fibers, which are present in a discontinuous phase. The prepregs can be prepared using conventional extrusion processing, but careful attention must be given to the selection of film dies, the use of high pumping rates and high draw-down ratios. In addition, fiber loading should be high, e.g., 20 to 50%, to facilitate fiber orientation due to steric effects.

## DESCRIPTION OF THE DRAWINGS

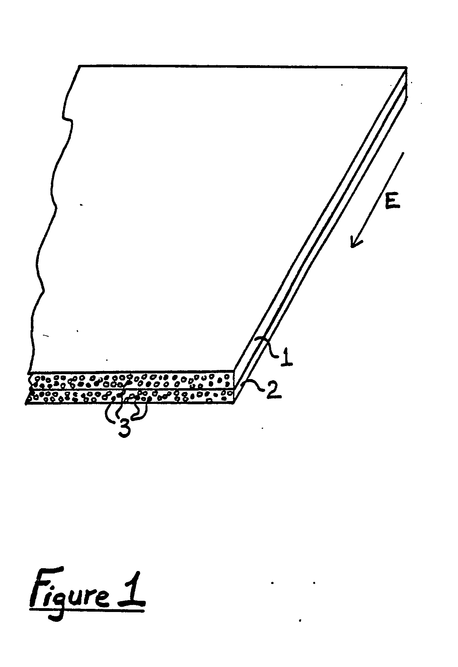

Figure 1 illustrates in perspective view a high strength fiber-reinforced thermoplastic composite of this invention. The composite is composed of two juxtaposed thermoplastic film layers (1 and 2), both of which contain a high loading (e.g., up to 50% by volume) of short reinforcing fibers (3). The fiber-loading films are extruded in the direction of the arrow (E), and in the extrusion process, the reinforcing fibers (3) become substantially unidirectionally aligned. The unidirectionality of the fibers (3) is shown in the figure by the nearly circular cross-sections of the individual bisected fibers (3), shown on the leading edge of the pictured composite.

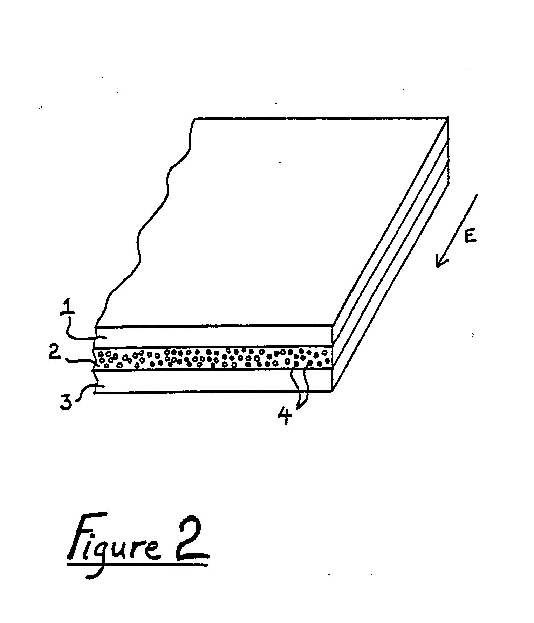

Figure 2 is a perspective view of a 3-layered composite including two pure resin outer layers ("cap" layers; 1 and 3) on either surface of a central fiber-reinforced thermoplastic resin thin film (2).

## SUMMARY OF THE INVENTION

In accordance with the present invention there are provided thermoplastic composite prepregs comprising:

(1) at least one thin layer comprising a thermoplastic resin film reinforced with a discontinuous phase comprising short, substantially unidirectional, reinforcing fibers, and, optionally,

(2) one or more layers of a non-reinforced thermoplastic resin film, said composite prepregs consisting of at least two closely juxtaposed neighboring layers (a), (b) or (a) and (b), each layer being adapted to thermoform independently when heated then to bond to its neighbor or neighbors during cooling.

Also contemplated are finished composites prepared by consolidating such prepregs with heat and/or pressure and/or vacuum.

In addition, this invention provides a method for forming high strength fiber-reinforced thermoplastic articles comprising:

(1) coextruding to form an integral composite film at least two thermoplastic layers selected from

(a) a thin thermoplastic resin film reinforced with a discontinuous phase comprising short, substantially unidirectional, reinforcing fibers, and, optionally

(b) a non-reinforced thermoplastic resin film, wherein at least one fiber-reinforced thin thermoplastic layer (a) is present;

(2) laying up one or more of said composite films on a mold; and

(3) consolidating said one or more composite films under heat and/or pressure to obtain a dimensionally stable reinforced thermoplastic article.

It will be understood that perfect unidirectional alignment of the short reinforcing fibers used in this invention is not necessary and, in any case, would be impossible to attain using conventional processing techniques. Accordingly, in the context of this disclosure, the phrase "substantially unidirectional" is in direct contrast to the random (omnidirectional) fiber orientation of long fiber mats (discussed supra); and a substantially unidirectional short fiber-reinforced layer used in the present invention will include any reinforced thermoplastic films in which a single direction of general orientation of the reinforcing fibers is apparent on visual or microscopic inspection, or which film obtains physical properties characteristic of unidirectional fiber reinforcement which would be absent in the case of random fiber orientation. Such physical characteristics are well known to persons skilled in the art and will readily permit the practitioner to identify and prepare suitable thermoplastic films for the preparation of composites in accordance with this invention.

## DETAILED DESCRIPTION OF THE INVENTION

In general, any thermoplastic resin normally used as the continuous phase in reinforced webs suitable for laminating can be used in this invention. Illustrative are addition polymers and condensation polymers, such as a polycarbonate; a polyester; a polyimide, including polyetherimides; a polysulfone; a polyether; a polyolefin; a vinyl addition polymer; a fluoropolymer; a chloropolymer; or a blend of polymers comprising any of the foregoing. Special mention is made of films in which the thermoplastic resin comprises an aromatic polycarbonate such as poly(bisphenol-A carbonate); a polyester such as poly(butylene terephthalate), poly(ethylene terephthalate) or a blend of such polyesters; a polyetherimide; a poly(siloxane-cobisphenol-A carbonate); a poly(ether-ester-imide); a blend of poly(butylene terephthalate), poly-(bisphenol-A carbonate) and a core shell polymer comprising polybutadiene, or an acrylate rubber, polystyrene and a poly(methyl methacrylate). Such polymers are all well-known from the literature and are commercially available from a number of sources, as illustrated for example, by the Modern Plastics Encyclopedia, 1982-1983, McGraw-Hill Inc., New York, October 1982, Volume 9, Number 10A, pages 6-113, inclusive. Reference is made also to the resins disclosed in Robeson et al, U.S. 4,286,075, Fox et al, U.S. 4,510,289 and 4,511,693, McCready et al, U.S. 4,556,688, and Peters, U.S. 4,613,300.

At least one resin layer of a composite according to the invention will be reinforced by a fibrous reinforcing agent cut to a short length, that is, 0.02 to 2 cm, preferably from about 0.25 to about 0.50 cm. Such fibrous reinforcing agents may be selected from a range of materials including but not limited to glass, carbon, aramid, metal, ceramic, silicate, quartz, boron, and silicon carbide fibers, metal-coated such fibers, and mixtures or combinations or hybrids or any of the foregoing. Many suitable fibrous reinforcements are described in Modern Plastics Encyclopedia, McGraw-Hill, Inc. 1982-1983, pp. 152-156.

The preferred reinforcing agents are fibrous glass filaments comprised of lime-aluminum borosilicate glass that is relatively soda free. This is known as "E" glass. Where electrical properties are not important, other glass fiber grades, e.g., the low soda glass known as "C" glass, may be used. Special mention is made of glass filaments known as G-filaments. The filaments are made by standard processess, e.g., by steam or air blowing, flame blowing and mechanical pulling. The preferred filaments for plastics reinforcement are made by mechanical pulling. The filament diameters range from about 3 to 19 microns, but this is not critical to the present invention.

Although it is only necessary to have at least a reinforcing amount of the fibrous reinforcing agent present in the fiber-reinforced resin layer, it will be appreciated by those skilled in this art that high fiber loading is often desirable to obtain enhanced performance, e.g., in terms of impact, tensile strength or especially tensile modulus. A drawback of fibrous mat reinforcement is that its particular fiber geometry (random orientation) limits the fiber volume fraction that can be obtained in a mat-reinforced resin layer. In the fiber-reinforced resin layers of the present invention, the use of substantially unidirectionally aligned fiber reinforcing agents permits high fiber loading, and preferably the reinforced resin layers will contain from about 20% to about 50% by weight of short reinforcing fibers (based on the total weight of the reinforced resin layer). Besides providing enhanced physical properties in the final composite, high fiber loadings help to achieve the substantially unidirectional orientation of the short fibers due to steric and viscous effects.

Ordinarily, short fibers have been found to be unsuitable as reinforcing agents in structural applications calling for shaped parts because, when injection molded, the have determinable but non-optimal orientation which results in fiber depleted areas which occur in blending and stretching a reinforced blank to make a shaped article. Blending causes high tensile strain at outside corners making fiber depletion and fiber reorientation likely or causes relative sliding between the layers of layered composites resulting in approximately the same strain. Knit lines are another undesireable feature of injection molding as are constraints on part area due to machine capacity and channel blockage. As mentioned previously, the problem of fiber depleted areas such as bends of small radius has been addressed in the prior art with mat-reinforced composites. However, the mat-type reinforcement geometry is semi-continuous, and during forming operations, both reinforcements and resin components flow to fill mold cavities, although through the action of very substantial applied pressures (ca. 4000 p.s.i.).

On the other hand the composite prepregs of the present invention are highly drapeable when heated and they, therefore, can be used to form complex three-dimensional shapes when layed up and laminated. Because the prepregs are draped rather than strictly flowed into shape, fiber depletion at sharp-radius corners is avoided. Even where the present materials are stretched such as in vacuum forming, they are superior to thick monolayers due to sliding between layers and alignment of fibers within layers. The composites of the present invention are highly resistant to surface delamination. In addition, because the reinforcement is discontinuous, cuts in the prepreg will have little or no effect on the properties of the finished composite.

Multi-layered composites can be prepared in which the orientation of the various reinforced films will be varied according to the intended use, e.g., on the basis of an iterative stress analysis, using techniques well known to those skilled in the art. The thickness of the composites can be varied by employing multiple layers or varying the overall configuration of the composite, such as with folds, patches, darts and pleats. The composition of the individual layers of the composites may also be varied, e.g., according to resin type, type of reinforcement, fiber volume fraction, etc.

In order to obtain the substantially unidirectional orientation of the fibers, fiber-reinforced layers are prepared as thin films, having a thickness of only about 0.002 to about 0.3 cm. As mentioned previously, high fiber loading also contributes to orientation of the fibers.

The thin-layered reinforced prepregs are preferably produced by conventional extrusion, wherein film dies are used, and pumping rates and drawndown ratios are varied in order to produce thin films with substantially unidirectional fiber orientation. If necessary, additional drawn-down can be effected in another step. Although, as mentioned, the thin film layers in each prepreg will comprise a thickness of from about 0.002 to about 0.3 cm, the thickness will preferably be from about 0.015 to about 0.075 cm.

Drapabililty is minimal at room temperature particularly in the machine direction. However, one heated, drapability will improve. Exemplary of this is glass fiber reinforced poly(1,4-butylene terephthalate) (PBT) prepreg at thicknesses as low as 0.025 cm which exhibits little drapability at room temperature, but once heated above the melting point of PBT, becomes highly drapable and stretchable in all directions. A significant advantage of this invention is that a sandwich can be arranged so that each layer deforms independently and then bonds to its neighbor or neighbors during cooling. Thermoformability using only a vacuum is an example of this method.

Short fiber-reinforced composite films formed by extruding or otherwise producing such fiber-reinforced layers or layered fiber-reinforced layers and unreinforced resin layers may be layed up to a tool to form a geometrically complex part. Such composite film can be layed up in a multitude of sequences, depending on the properties desired in the final composite.

Extrusion of prepreg using composite pellets reinforced with integral, monodisperse, 0.25 inch fiber glass has been demonstrated with resultant preservation of fiber length and nearly perfect orientation. Reduced brittleness of composites formed from these prepregs was confirmed by transverse puncture tests, the resistance being vastly improved.

The lay-up can employ films of different composition; resin type, fiber type, and fiber volume fraction can be varied from layer to layer. In many cases automatic lay-up can be used.

Because the reinforced films are very thin, interlaminar shear stress is quite low, even at the free edges, relative to such stress in composites from thicker unidirectional prepregs. The films can be fused together with heat and moderate pressure (approximately 10 psi) and/or vacuum to make a rigid non-planar part.

In forming the final composite, head and/or pressure is applied to the prepreg lay-up to the minimum temperature/pressure at which complete fusion between layers is effected. Heating may be accomplished using conventional means e.g., dielectric stimulus, radiant heating, convective heating or conductive heating from the tool itself. After the lay-up has been sufficiently heated, the female part of the tool is brought into clamping position to exert pressure against the part. In addition to assuring delamination-free knits, this method is useful to obtain particular finishes on the surface of the part and for providing additional contact area for quench cooling. For high speed applications, the lay-up can be built on a cold tool, and then transferred in toto to the identical hot tool for lamination.

Similarly, lay-ups may be clamped in thermoforming tool; heating by standard means, typically radiant heating; then thermoformed with low pressure and/or vacuum. Consolidation of the lay-up may have been done previously or may be done simultaneously during forming.

The following examples illustrate the method and the composites of this invention. They are not intended to be construed to limit the claims in any manner whatsoever.

## PROCEDURE A

Composite prepreg films were prepared by coextruding pure resin and short glass fiber-reinforced resin in three layers: a central 40 wt. % fiber-reinforced layer and two pure resin cap layers. The pure resin layers were made from clear poly(bisphenol-A carbonate), LEXAN● ML 9103, General Electric Company, and the binder resin was poly(bisphenol-A carbonate), LEXAN● ML 3414, General Electric Company, tinted yellow. The binder resin contained 0.08% bromine and had an intrinsic viscosity of 0.49-0.55 as measured in chloroform at 25° C. The glass fibers were initially 1/8 inch long.

The 3-layer film was extruded in sheets 26 inches wide and 0.03 inches thick. The tensile strength and modulus of the 3-layer prepreg sheets were evaluated in both the extrusion flow (machine) and transverse directions. Dogbone shaped specimens were stamped from the sheets with a punch die. The die has a 2 inch gage section and a width of 0.25 inch. The tests were performed at room temperature on a Model 4202 Instron with a 100 lb. load cell. A crosshead speed of 0.0033 in./sec was used. Results for seven test were averaged. The results indicated a machine direction modulus of $1.2 \times 10^6$ psi and a machine direction tensile strength of 10,000 psi, while the transverse modulus and strength were found to be $0.67 \times 10^6$

psi and 5.000 psi, respectively. These results indicated that the short glass fibers in the prepreg are highly aligned in the flow direction.

## EXAMPLE 1

Rectangular sections, $5\frac{1}{2}$ x $4\frac{1}{2}$ inches were cut from the 3-layer sheets prepared according to Procedure A at angles of $0°$, $30°$ and $45°$ to the machine direction. Six-ply laminates were formed from the cut-out sections with the following layup sequences: $[0°_6 0]_T$, $[0°/\pm45°]_s$ and $[0°/\pm30°]_s$. The plies were stacked in a room temperature $5\frac{1}{2}$ x $4\frac{1}{2}$ inch mold, which was then place in a Pasadena Hydraulic press preheated to $170°$C. When the mold reached $150°$C, 2 tons of pressure were applied and held until the temperature reached $170°$C. At this time, the mold was immediately removed from the press and placed in a cooling press under 5 tons of force and quenched to room temperature. The total heat-up time was 10 minutes, with approximately 5 minutes spent above $150°$C. A relatively low molding temperature and short cycle time were chosen to preserve fiber orientation in the individual plies. The thickness of the final composite was 0.16 inch, and the surface finish was smooth and glossy. When the composite was viewed edge on, the clear cap resin layers could be easily distinguished from the yellow fiber-loaded central resin layer.

The poly(bisphenol-A carbonate) resin was dissolved away from a pre-weighed section of the laminate be refluxing for 24 hours with methylene chloride. The weight of the remaining fibers indicated the total fiber loading in the laminate was about 20 wt. % (including the pure resin cap layers). A sampling of 20 fibers showed the average fiber length to be about 0.02 cm. Optical micrographs of polished laminate cross-sections were taken using an image analyzer to enhance contrast between the fibers and the matrix. The cross sections of fibers in the $0°$ plies were nearly circular, indicating a high degree of fiber alignment even after processing. No voids or matrix cracking were observed.

The room temperature flexural modulus and strength of the laminates were obtained using a four-point bend test. Samples were cut from the molded laminates with a band saw. These samples were 5 inches long and 0.9 inch wide. The outer span of the quarter-point bending jig measured 3.94 in., thus providing a span to depth ratio of 25:1.

Modulus and strength tests were performed using a Model 1350 hydraulic Instron equipped with a 500 lb. load cell and run at a crosshead speed of 0.008 in./sec. The $[0°_6]_T$ laminate showed a modulus of $1.2 \times 10^6$ psi and a strength of 15,000 psi when tested in the machine direction and a strength of 5,000 psi in the transverse direction. These values also indicate the orientation in the original prepreg was maintained during processing. The fracture surface was smooth and showed no signs of delamination. The modulus and strength of the $[0°/\pm45°]_s$ laminate was found to be $0.9 \times 10^6$ psi and 13,000 psi, respectively.

## EXAMPLE 2

If the procedure of Example 1 is repeated, substituting poly(butylene terephthalate) (PBT) resin for poly(bisphenol-A carbonate) resin, a laminated article according to this invention will be obtained. The article exhibits no voids, no matrix cracking, and no delamination, the results being similar to those obtained in Example 1.

## EXAMPLE 3

If the procedure of Example 1 is repeated, substituting poly(ethylene terephthalate) (PET) resin for poly(bisphenol-A carbonate) resin, a laminated article according to the invention will be obtained.

## EXAMPLE 4

If the procedure of Example 1 is repeated substituting a polyetherimide (PEI) resin for poly-(bisphenol-A carbonate) resin, a laminated article according to this invention will be obtained.

## EXAMPLE 5

If the procedure of Example 1 is repeated substituting poly(siloxane-co-bisphenol-A carbonate) resin for poly(bisphenol-A carbonate) resin, a laminated article according to the invention will be obtained.

## EXAMPLE 6

If the procedure of Example 1 is repeated substituting a poly(ether-ester-imide) resin for poly-

(bisphenol-A carbonate) resin, a laminated article according to this invention will be obtained.

## EXAMPLE 7

If the procedure of Example 1 is repeated, substituting a blend of poly(butylene terephthalate), poly(bisphenol-A carbonate) and a core-shell polymer comprising polybutadiene, polystryene and poly(methyl methacrylate) resins for poly-(bisphenol-A carbonate) resin, a laminated article according to the invention will be obtained.

The above mentioned patents and publications are incorporated herein by reference.

Many obvious variations will suggest themselves to those skilled in the art in light of the above detailed description. For example, instead of using glass fibers, other fibrous reinforcing agents, such as carbon or graphite, aramid fibers or hybrids, such as aramid/carbon, aramid/glass, aramid/carbon/glass, or carbon/glass or stainless steel, nickel-coated graphite, or the like, can be substituted. Instead of laminating fiber-reinforced layers between pure resin layers, different combinations of layers can be laminated to form a composite prepreg, such as alternating fiber-reinforced layers with non-reinforced, pure resin layers, alternating fiber-reinforced layers at one fiber loading with fiber-reinforced layers having a different fiber loading, using cap layers or intermediate layers of pure resin or resin filled with inorganic fillers or pigments, using cap layers that are thermoplastic elastomers thereby practicing interleaf toughening, etc.

## Claims

1. A fiber-reinforced thermoplastic composite prepreg comprising

(a) at least one layer comprising a thin thermoplastic resin film reinforced with a discontinuous phase comprising short, substantially unidirectional reinforcing fibers, and, optionally,

(b) one or more layers comprising a non-reinforced thermoplastic resin film, said thermoplastic composite prepreg consisting of at least two closely juxtaposed neighboring layers (a), (b) or (a) and (b), and each layer being adapted to thermoform independently when heated then to bond to its neighbor or neighbors during cooling.

2. A composite prepreg as defined in Claim 1 wherein said thermoplastic resin is independently selected from a polycarbonate, a polyester, a polyimide, a polysulfone, a polyether, a polyolefin, a vinyl addition polymer, a fluoropolymer, a chloropolymer or a blend of polymers comprising any of the foregoing.

3. A composite prepreg as defined in Claim 2 wherein said thermoplastic resin comprises an aromatic polycarbonate.

4. A composite prepreg as defined in Claim 3, wherein said thermoplastic resin comprises poly-(bisphenol-A carbonate).

5. A composite prepreg as defined in Claim 2 wherein said thermoplastic resin comprises poly-(butylene terephthalate), poly(ethylene terephthalate) or a mixture thereof.

6. A composite prepreg as defined in Claim 2 wherein said thermoplastic resin comprises a polyetherimide.

7. A composite prepreg as defined in Claim 2 wherein said thermoplastic resin comprises a poly-(siloxane-co-bisphenol-A carbonate).

8. A composite prepreg as defined in Claim 2 wherein said thermoplastic resin comprises a poly-(ether-ester-imide).

9. A composite prepreg as defined in Claim 1 wherein said thermoplastic resin comprises a poly-(butylene terephthalate), poly(bisphenol-A carbonate) and a core shell polymer comprising polybutadiene or an acrylate rubber, polystyrene and poly(methyl methacrylate).

10. A composite prepreg as defined in Claim 1 wherein said reinforcing fibers are selected from glass, carbon, aramid, metal, ceramic, silicate, quartz, boron or, silicon carbide filters, metal-coated such fibers, or a combination of any of the foregoing.

11. A composite prepreg as defined in Claim 10 wherein said reinforcing fibers comprise glass fibers.

12. A composite prepreg as defined in Claim 1 wherein said reinforcing fibers comprise from about 20 to about 50 percent by weight of said thin thermoplastic resin layer (a).

13. A composite prepreg as defined in Claim 1 comprising at least two fiber-reinforced thin thermoplastic resin film layers (a).

14. A composite prepreg as defined in Claim 13, wherein the relative direction of reinforcing fiber orientation varies from one thin thermoplastic resin film layer (a) to another.

15. A composite prepreg as defined in Claim 13, wherein the precent by weight of reinforcing fibers present in the thin thermoplastic resin films varies from one layer (a) to another, within the range of 20 percent to 50 percent by weight, based on the total weight of the fiber-reinforced thin thermoplastic resin film layer.

16. A composite prepreg as defined in Claim 1 comprising at least two non-reinforced thermoplastic resin film layers (b).

17. A composite prepreg as defined in Claim 16 wherein at least one fiber-reinforced thin thermoplastic resin film layers (a) are disposed between two non-reinforced thermoplastic resin layers (b).

18. A composite prepreg as defined in Claim 16 comprising alternating fiber-reinforced layers (a) and non-reinforced layers (b), provided further that both of the outer layers are non-reinforced thermoplastic resin film layers.

19. A composite as defined in Claim 1 consisting of one fiber-reinforced, thin thermoplastic resin film layer (a) juxtaposed between two non-reinforced thermoplastic film cap layers (b).

20. A composite prepreg as defined in Claim 1 wherein said at least two closely juxtaposed layers are co-extruded layers.

21. A composite prepreg as defined in Claim 1 wherein said fiber-reinforced thin thermoplastic resin film (a) has a thickness of from about 0.002 to about 0.3 cm.

22. A dimensionally stable, fiber-reinforced thermoplastic composite comprising

(a) at least one layer comprising a thin thermoplastic resin film reinforced with a discontinuous phase comprising short, substantially unidirectional reinforcing fibers, and, optionally,

(b) one or more layers comprising a non-reinforced thermoplastic resin film,

said thermoplastic composite consisting of at least two closely juxtaposed neighboring layers (a), (b) or (a) and (b), each layer being bonded to its neighbor by heating and cooling.

23. A composite as defined in Claim 22 wherein said thermoplastic resin is independently selected from a polycarbonate, a polyester, a polyimide, a polysulfone, a polyether, a polyolefin, a vinyl addition polymer, a fluoropolymer, a chloropolymer or a blend of polymers comprising any of the foregoing.

24. A composite as defined in Claim 23 wherein said thermoplastic resin comprises an aromatic polycarbonate.

25. A composite as defined in Claim 24 wherein said thermoplastic resin comprises poly-(bisphenol-A carbonate).

26. A composite as defined in Claim 23 wherein said thermoplastic resin comprises poly-(butylene terephthalate), poly(ethylene terephthalate) or a mixture thereof.

27. A composite as defined in Claim 23 wherein said thermoplastic resin comprises a polyetherimide.

28. A composite as defined in Claim 23 wherein said thermoplastic resin comprises a poly-(siloxane-co-bisphenol-A carbonate).

29. A composite as defined in Claim 23 wherein said thermoplastic resin comprises a poly-(ether-ester-imide).

30. A composite as defined in Claim 23 wherein said thermoplastic resin comprises poly-(butylene terephthalate), poly(bisphenol-A carbonate) and a core shell polymer comprising polybutadiene or an acrylate rubber, polystyrene and poly(methyl methacrylate).

31. A composite as defined in Claim 22 wherein said reinforcing fibers are selected from glass, carbon, aramid, metal, ceramic, silicate, quartz, boron, or silicon carbide fibers, metal-coated such fibers, or a combination of any of the foregoing.

32. A composite as defined in Claim 31 wherein said reinforcing fibers comprise glass fibers.

33. A composite as defined in Claim 22 wherein said reinforcing fibers comprise from about 20 to about 50 percent by weight of said thin thermoplastic layer (a).

34. A composite as defined in Claim 22 comprising at least two fiber-reinforced thin thermoplastic resin film layers (a).

35. A composite as defined in Claim 34, wherein the direction of reinforcing fiber orientation varies from one thin thermoplastic resin film layer (a) to another.

36. A composite as defined in Claim 34, wherein the precent by weight of reinforcing fibers present in the thin thermoplastic resin films varies from one layer (a) to another, within the range of 20 percent to 50 percent by weight, based on the total weight of the fiber-reinforced thin thermoplastic resin film layer.

37. A composite as defined in Claim 22 comprising at least two or more non-reinforced thermoplastic resin film layers (b).

38. A composite as defined in Claim 37 wherein at least one fiber-reinforced thin thermoplastic resin film layers (a) are disposed between two non-reinforced thermoplastic resin layers (b).

39. A composite as defined in Claim 37 comprising alternating fiber-reinforced layers (a) and non-reinforced layers (b), provided further that both of the outer layers are non-reinforced thermoplastic resin film layers.

40. A composite as defined in Claim 22 consisting of one fiber-reinforced, thin thermoplastic resin film layer (a) juxtaposed between two non-reinforced thermoplastic resin film cap layers (b).

41. A composite as defined in Claim 22 wherein said at least two closely juxtaposed layers are co-extruded.

42. A composite as defined in Claim 22 wherein said fiber-reinforced thin thermoplastic resin film (a) has a thickness of from about 0.002 to about 0.3 cm.

43. A method for forming high strength fiber-reinforced thermoplastic articles comprising

(1) coextruding to form an integral composite film, at least two thermoplastic layers selected from (a) a thin thermoplastic resin film reinforced with a discontinuous phase comprising short, substantially unidirectional reinforcing fibers, and, optionally, (b) a non-reinforced thermoplastic resin wherein at least one fiber-reinforced thin thermoplastic resin layer (a) is present;

(2) laying up one or more of said composite films on a mold; and

(3) consolidating said one or more composite films under heat and/or pressure to cause fusion of said layers to obtain a dimensionally stable reinforced thermoplastic article.

44. A method as defined in Claim 43 wherein said thermoplastic resin is selected from a polycarbonate, a polyester, a polyimide, a polysulfone, a polyether, a polyolefin, a vinyl addition polymer, a fluoropolymer, a chloropolymer, or a blended composition comprising any of the foregoing.

45. A method as defined in Claim 39, in which said thermoplastic resin comprises an aromatic polycarbonate.

46. A method as defined in Claim 45, in which said thermoplastic resin comprises poly(bisphenol-A carbonate).

47. A method as defined in Claim 44 wherein said thermoplastic resin comprises poly(butylene terephthalate), poly(ethylene terephthalate) or mixture thereof.

48. A method as defined in Claim 44 wherein thermoplastic resin comprises a polyetherimide.

49. A method as defined in Claim 44 wherein said thermoplastic resin comprises poly(siloxane-co-bisphenol-A carbonate).

50. A method as defined in Claim 44 wherein said thermoplastic resin comprises a poly(ether-ester-imide).

51. A method as defined in Claim 44 wherein said thermoplastic resin comprises poly(butylene terephthalate), poly(bisphenol-A carbonate) and a core-shell polymer comprising polybutadiene, an acrylate rubber, polystyrene and poly(methyl methacrylate).

52. A method as defined in Claim 43 wherein said reinforcing fibers are selected from glass, carbon, aramid, metal, ceramic, silicate, quartz, graphite, boron, and silicon carbide filters, metal-coated such fibers, or combinations of any of the foregoing.

53. A method as defined in Claim 52 wherein said reinforcing fibers comprise glass fibers.

54. A method as defined in Claim 45 wherein said reinforcing fibers comprise from about 20 to about 50 percent by weight of the thin thermoplastic resin layer (a).

55. A method as defined in Claim 39 wherein more than one fiber-reinforced thin thermoplastic resin film layer (a) is co-extruded.

56. A method as defined in Claim 43, wherein the direction of reinforcing fiber orientation varies from one thin thermoplastic resin film layer (a) to another in said composite film.

57. A method as defined in Claim 48, wherein the percent by weight of reinforcing fibers present in the thin thermoplastic resin films varies from one layer (a) to another, within the range of 20 percent to 50 percent by weight, based on the total weight of the fiber-reinforced thin thermoplastic resin film layer.

58. A method as defined in Claim 43 wherein two or more non-reinforced thermoplastic resin film layers (b) are co-extruded with said at least one fiber-reinforced thin layer (a).

59. A method as defined in Claim 58 wherein one or more fiber-reinforced thin thermoplastic resin film layers (a) are disposed between two non-reinforced thermoplastic resin cap layers (b).

60. A method as defined in Claim 58 wherein fiber-reinforced layers (a) and non-reinforced layers (b) are co-extruded and alternated, provided further that both of the outer layers are non-reinforced thermoplastic resin film layers.

61. A method as defined in Claim 43 wherein one fiber-reinforced, thin thermoplastic resin film layer (a) is co-extruded between two non-reinforced thermoplastic resin film layers (b).

62. A method as defined in Claim 43 wherein said at least one said fiber-reinforced thin thermoplastic resin film (a) has a thickness of from about 0.002 to about 0.3 cm.

## Figure 1

Figure 2